**Europäisches Patentamt**

**European Patent Office**

**Office européen des brevets**

(19)

(11) Veröffentlichungsnummer: **0 045 332**
**B1**

(12)

# EUROPÄISCHE PATENTSCHRIFT

(45) Veröffentlichungstag der Patentschrift:
**15.01.86**

(21) Anmeldenummer: **80104667.3**

(22) Anmeldetag: **06.08.80**

(51) Int. Cl.⁴: **F 16 K 1/48**

(54) **Hubventil, insbesondere für Sanitär-Armaturen.**

(43) Veröffentlichungstag der Anmeldung:
**10.02.82 Patentblatt 82/6**

(45) Bekanntmachung des Hinweises auf die Patenterteilung:
**15.01.86 Patentblatt 86/3**

(84) Benannte Vertragsstaaten:
**AT CH DE FR GB IT LI NL SE**

(56) Entgegenhaltungen:
**AT-B-251 495**
**CH-A-616 219**
**DE-A-1 815 717**
**DE-B-1 260 254**
**DE-C-50 959**
**DE-U-6 904 238**
**DE-U-7 227 309**
**DE-U-7 815 899**
**FR-A-478 963**
**US-A-2 088 666**
**US-A-3 960 364**

(73) Patentinhaber: **Seim, K. Jochen, Breitwiesen 2-5
Postfach 1236, D-7306 Denkendorf (DE)**

(72) Erfinder: **Seim, K. Jochen, Breitwiesen 2-5
Postfach 1236, D-7306 Denkendorf (DE)**

LIBER, STOCKHOLM 1986

EP 0 045 332 B1

## Beschreibung

Die Erfindung betrifft ein Hubventil gemäß dem Oberbegriff des Anspruchs 1, bekannt aus dem Gebrauehsmuster DE-U-6904238.

Ähnliche Hubventile sind als sogenannte Patronen bekannt, die entgegen der üblichen Art, eine Verbindung des Ventilsitzes mit dem Dichtschieber (=Stellglied) aufweisen, wobei für den Dichtvorgang,(=Schließvorgang), wie klassisch üblich, Materialien von verschiedenen Härtegraden - beispielsweise Messing zu Gummi - Verwendung finden.

Desweiteren sind übereinanderliegende, fest aufeinander verbundene Keramikscheiben mit unterschiedlichen Bohrungen oder Durchbrüchen für die Wasserführung bekannt, die durch verdrehen der Scheiben zueinander ein Öffnen und Schließen des Ventils ermöglichen.

Die Nachteile sind bei dem gemäß der DE-U-6904238 System die Ermüdung des weicheren Materials, daß je nach Beanspruchung zu Funktionsstörungen - Undichtigkeiten, Geräuschen o. ä. - führen kann.

Bei der zweiten beschriebenen Art entstehen durch die zwangsläufig verengten Wasserdurchlauf - Querschnitte starke Fließgeräusche, die durch zusätzliche Funktionsdämmungsteile nur sehr ungenügend beseitigt werden können. Zudem lassen sich solche Konstruktionen nur in kleinen Bewegungsspielräumen, meist 90°, betätigen und sind dadurch in der Mengen- und Temperaturregelung sehr schwer beherrschbar. Zudem verursachen sie in ihrer Art als sogenannte "Achnellschlußventile" konzipiert Rückschläge in dem Leitungssystem. Ebenso ergibt sich durch die unterschiedlichen Baumaße gegenüber der gebräuchlichen Norm, die Unmöglichkeit der Austauschbarkeit in vorhandenen Gehäusen.

Der Erfindung liegt die Aufgabe zugrunde diese grundsätzlichen, schwerwiegenden Funktionsnachteile absolut zu beseitigen.

Die Erfindung wie sie in dem Anspruch 1 gekennzeichnet ist, löst diese Aufgabe wobei die Dauerdichtheit durch das flexibel aufeinander zulaufende und aufsitzende Dichtsystem (=Schließsystem) voll gewährleistet wird. Ebenso ist ein maximaler Wasserdurchfluß und Feinregulierbarkeit durch Veränderung der Ventilspalthöhe (Hub); und durch Anpassung an die Norm bei der Austauschbarkeit, sogar mit anderen Systemen ohne Schwierigkeiten, optimal gelöst.

Die Ziele der Erfindung sind dadurch erreicht, daß die zu- und voneinander bewegten Dichtteile,(=Schließteile) jeweils die Ventilscheibe oder der Ventilsitz, flexibel in ihrer Lagerung untergebracht sind. Durch die beim Betätigungsvorgang axial drehende Bewegung entsteht ein offenes Ventilsystem, und die feinstgeschliffenen Oberflächen (=Schließflächen) der Ventilscheibe und des Ventilsitz werden beim Schließvorgang durch die gleitende Drehbewegung saugend aufeinander gedrückt und dadurch die absolute Dichtwirkung erzielt. Toleranzen der Bauteile werden durch die Flexibellagerungen ausgeglichen. Dabei ist vorzugsweise das Flexibellager als Gummifeder oder ähnliches Bauelement zu verstehen, andererseits können auch Federn o. ä. Verwendung finden. Die Betätigung erfolgt durch eine schlüsselartige Spindel (=Steckspindel) püber den Betätigungshandgriff.

Beim erfindungsgemäßen Hubventil ist der sonst bei derartigen Ventilkonstruktionen allgemein auftretende starke Verschleiß und Überbeanspruchung der Schließteile auf Null reduziert.

Ein erfindungsgemäßes Ventil ist fertigungstechnisch rationell herzustellen, bietet enorme Vorteile in der dauerhaften Funktionssicherheit und außerdem durch die gegebene Austauschbarkeit mit eigenen und fremden Systemen, in der Lagerhaltung und Wirtschaftlichkeit, enorme Vorteile.

Darüberhinaus sind die mit der Erfindung erzielten Vorteile besonders wertvoll, weil zum Austausch des Dichtsystems keine speziellen Kenntnisse erforderlich sind, also dieser auch von Hilfskräften vorgenommen werden kann. Weiterhin erhöht der Umbau vorhandener, auch ältere Sanitär-Armaturen o. ä., auf das erfindungsgemäße Ventil in sehr beachtlichem Maße den Wert des so veränderten Produktes. Besondere Ansführungsarten der Erfindung sind in der abhängigen Ansprüchen angegeben.

Ein Ausführungsbeispiel der Erfindung ist in der Zeichnung dargestellt und wird im folgenden näher beschrieben. Es zeigen

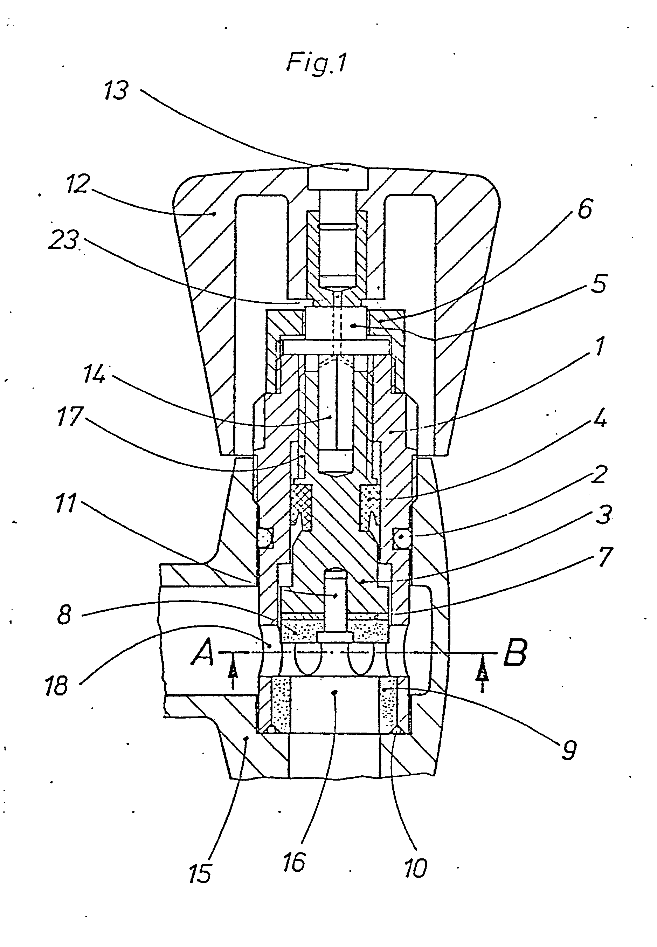

Fig. 1 Ein erfindungsgemäßes Ventil im Längsschnitt

Fig. 2 Schnitt-AB der Fig. 1

Fig. 3 Detail Dichtsystemventilsitz des erfindungsgemäßen Ventils mit flexibel gelagerten Ventilsitz

Fig. 4 Detail des erfindungsgemäßen Ventils mit Anschlußformteil für fremde Systeme

Beim ausführungsweise gezeigten Ventil wird das alle Funktionteile tragende Patronengehäuse 1 einschließlich Ventilsitz 9 in das Armaturengehäuse 15 eingeschraubt und mittels Dichtring 2 und Sitzdichtring 10 in demselben abgedichtet. Im Patronengehäuse 1 ist, in Gewinde 17 geführt und durch Topfdichtung 4 abgedichtet, der Dichtungs-Drehschieber (=Stellglied) 3, an dem die Keramik - Dichtscheibe (=Ventilschließscheibe) 8 durch Halterung 11 gegen Verdrehung gesichert und im Flexibellager 7 abgestützt, angebracht. Direkt gegenüber und großdimensioniert befindet sich der ebenfalls gegen Verdrehung gesicherte Ventilsitz 9. Das auf- und niederschrauben des Dichtungsdrehschiebers 3 - also öffnen und schließen des Ventilswird mittels des Griffes 12, der mit dem Steckverbindungsstift 13 auf der Steckspindel 5, die in der Spindelkappe 8 gelagert ist, über den Inbus-Mitnehmer 14, vorgenommen. Das flüssige Medium z.B. Wasser - fließt durch die Einflußöffnung 16 im Ventilsitz 9 in das Ventil ein und verläßt es durch die Ausflußöffnungen 18. Die Anordnung und mögliche große Dimensionierung der Durchflußöffnungen, sowie der große Querschnitt des Ventilhubes bei äußerst glatter Oberfläche des Ventildichtsystems geben Gewähr für eine äußerst geräuscharme Ausführung und rückschlagfreie Funktion.

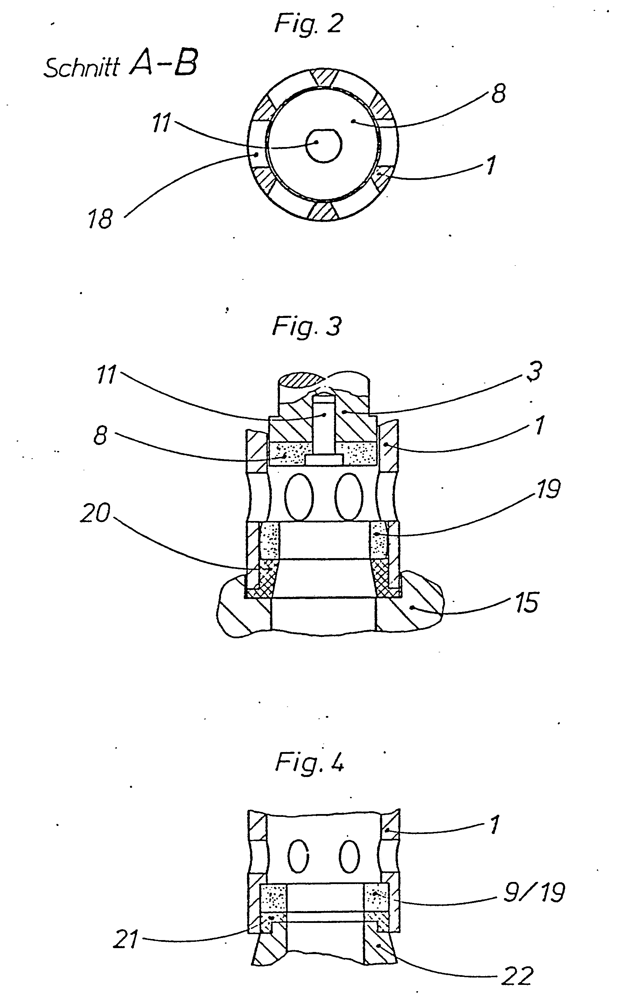

Wie in Fig. 3 dargestellt, kann das System auch in umgekehrter Funktion ausgeführt sein, dabei ist der Ventilsitz 19 mit einem Flexibellager 20 ausgestattet, wogegen das Flexibellager 7 bei der Dichtscheibe 8 entfallen kann. Dabei ist das Flexibellager 2ü so ausgebildet, daß es sowohl die Dichtung zum Gehäuse 15, als auch die Fixierung des Ventilsitzes 19 bewirkt.

Eine Ausführung für den Einbau in fremde Systeme ist in Fig. 4 beispielsweise dargestellt. Auf einen vorhandenen Ventilsitz 22 wird das komplette Patronengehäuse 1 mit Ventilsitz 9 oder 19, mittels des Kupplungsformteiles 21 aufgesetzt und dicht verbunden.

Ebenso sind Ausführungen mit geteiltem Patronengehäuse, auch aus unterschiedlichen Materialien, in der Erfindung erkannt und vorgesehen.

Die Wirkungsweise des Erfindungsgegenstandes ist vorrangig in dem flexibel gelagerten Dichtsystem mit auf- und voneinander zulaufender Dichtscheibe und Ventilsitz aus Hartmaterial( = Keramik), wobei sich beim Schließvorgang in der Endphase die glatten Oberflächen durch axiale Drehbewegung gleitend und voll dichtend aneinander legen, begründet und klar erkennbar. Von diesem Grundgedanken ausgehend, ergeben sich eine Reihe einschneidender Verbesserungen gegenüber den bisher bekannten Systemen. So ist es erstmals möglich, beispielsweise nach niederschrauben des Dichtung-Drehschiebers 3 (Ventil in Schließstellung) und abziehen des Griffes 12 und Spindel 5 mit Spindelkappe 8, ein nachfetten des vor Wasser geschützten Ventilteiles, ohne sbstellen des Durchflußmedien-Druckes vorzunehmen. Über die erwähnte Ausführung hinaus, kann die Spindel 5 eine Schmierbohrung 23 aufweisen bei der mit Hilfe des Steckverbindungsstiftes 13 das nachfetten lediglich durch Kolbenbewegung des Verbindungsstiftes 13 durchgeführt werden kann.

Die Versuche mit Musterstücken haben ergeben, daß auf Grund des gewählten Flexibellagers und der Anordnung der Steckspindel als schlüsselartige Verbindung zum Handgriff, das präzise und als angenehm und leichtgängig empfundene schließen und öffnen des Ventils, sowie die unübertroffene feinfühlige Regulierbarkeit vom Benutzer besonders geschätzt wurde, dazu gehört auch, daß das kompakt aufeinander sitzende Ventilsystem kein überdrehen, verklemmen, auftreten von starken Fließgeräuschen durch verformte Dichtungen und anderen Nachteilen bestehender Ventilkonstruktionen, auftreten läßt.

Durch sorgfältige Auswahl und Abstimmung der Materialien aufeinander, ergibt sich die Handhabe, sowohl durch mechanische, wie chemische Zusammensetzung die Erfindung für unterschiedliche Medien einzusetzen.

**Patentansprüche**

1. Hubventil, das als Patrone komplett ausgewechselt werden kann, und das besteht aus einem Patronengehäuse (1) innerhalb dessen die Ventilteile wie Ventilsitz (9,i9), Ventilschließscheibe (8), Stellglied (3), Steckspindel (5) und Spindelkappe (6) axial übereinanderliegend untergebracht sind,
dadurch gekennzeichnet
- daß der Ventilsitz (9) und die Ventilschließscheibe (8) aus keramischem Material besteht, das feinstbearbeitete Schließflächen aufweist,
- daß einem der eine Schließfläche aufweisenden Ventilteile ein Flexibellager (7,20) zugeordnet ist,
- daß die Ventilschließscheibe (8) gegen Verdrehung gegenüber dem Stellglied (3) gesichert ist,
- daß das Stellglied (3) eine drehende Hubbewegung ausführt, so daß die zwei Schließflächen beim Absperren unter zunehmendem Kontaktdruck übereinander gleitend drehen und dadurch die absolute Dichtheit erzeugen.

2. Hubventil nach Anspruch 1 dadurch gekennzeichnet, daß das Flexibellager (7) wahlweise aus verschiedenen Materialien oder aus mechanischen Elementen besteht.

3. Hubventil nach Anspruch 1 und 2 dadurch gekennzeichnet, daß das im Schließsystem enthaltene Flexibellager (7; 20) wahlweise der Ventilschließscheibe (8) oder dem Ventilsitz (9;19) zugeordnet ist.

4. Hubventil nach Anspruch 1 bis 3 dadurch gekennzeichnet, daß die Ventilschließscheibe (8) und der Ventilsitz (9; 19) durch ein elastisches Kupplungsformteil (21) mit anderen vorhandenen Ventilsitzsystemen (22) dicht verbunden werden kann.

5. Hubventil nach Anspruch 1 bis 4 dadurch gekennzeichnet, daß über die Steckpindel (5) mittels einer Schmierbohrung (23) das Stellglied (3) ohne zusätzliches Abstellen des durchfließenden Mediums zu fetten ist.

6. Hubventil nach Anspruch 1 bis 5 dadurch gekennzeichnet, daß die Patrone sich aus zwei aufeinander abgestimmte und verbundene Bauteile aus unterschiedlichen Materialien - z.B. Messing und Kunststoff - zusammensetzt.

## Revendications

·1. Soupape d'arrêt à piston, sous forme de cartouche de rechange comprenant le corps de cartouche (1) dans le quel se trouvent les pièces suivantes: siège de robinet (9, 19), disque de fermeture (8) piston de réglage (3), axe enfoncée (5) et capuchon d'axe (6). Toutes ces pièces sont montées axialement.

Les caractéristiques sont:
- que le siège de robinet (9, 19) et le disque de fermeture (8) sont composés d'un matériau céramique d'une surface de fermeture de grande précision;
- que l'une des deux pièces (8 ou 9) est munie d'un support souple (7, 20);
- qu'il soit impossible que le disque de fermeture (8) tourne sans le piston de réglage (3);
- que le piston de réglage (3) assure l'étanchéité par un mouvement axial et tournant sur les surfaces de fermeture par glissement et pression de contact progressive;

2. La soupape d'arrêt revendiquée en 1 est caractérisée par le fait que le support souple (7, 20) peut être composé de divers matériaux ou d'éléments mécaniques.

3. La soupape d'arrêt revendiquée en 1 et 2 est caractérisée par le fait que le support souple (7, 20) peut être attribué à choix au disque de fermeture (8) ou au siège de robinet (9, 19);

4. La soupape d'arrêt revendiquée en 1 à 3 est caractêrisée par le fait que le disque de fermeture (8) et le siège de robinet (9, 19) assurent 1' étanchéité avec d'autres systèmes de fermeture (22) à l'aide d'une pieces de jonction souple (21);

5. La soupape d'arrêt revendiquée en 1 à 4 est caractérisée le fait qu'il est possible de lubrifier le piston de réglage (3) sans arrêter l'eau. Ceci est rendu possible par le percement (23) de l'axe enfoncée (5).

6. La soupape d'arrêt revendiquée en 1 à 5 est caractérisée par le fait qu'elle est composée de deux éléments de matériaux différents (par exemple laiton et plastique) qui forment la cartouche.

## Claims

1. Rotating lift valve,that can be changed as a complete cartridge consisting of the cartridge housing (1), within which valve parts such as the valve seat (9, 19), valve closure disc (8), positioning nut (3), valve stem (5) and stem cap (6) are located on the same axis, said cartridge comprising:
-said valve seat (9, 19) and said valve closure disc (8) are made of a ceramic material with very exact machined closing surfaces;
-a flexible pressure plate (7, 20) is provided with either said valve closure disc (8) or said valve seat (9);
-said valve closure disc (8) is secured and turns only with said positioning nut (3);
-said positioning nut (3) rises and lowers as it turns, allowing the closing surfaces to form a progressively strong seal when contact is made and pressure is continually applied, resulting in an absolute water tight fit.

2. The rotating lift valve of claim 1 wherein said flexible pressure plate (7, 20) can be made out of various materials or with mechanical elements.

3. The rotating lift valve of claim 1 and 2 wherein in the closing of the valve, said flexible pressure plate (7, 20) can be placed with either said valve closure disc (8) or said valve seat (9).

4. The rotating lift valve of claim 1 - 3 wherein said valve closure disc (8) and said valve seats (9, 19) remain tight with other available valve seat systems (22) through an elastic connection piece (21).

5. The rotating lift valve of claim 1 - 4 wherein said positioning nut (3) can be lubricated through a lubricating hole (23) in said valve stem (5) without having to shut off the flowing liquid. 6. The rotating lift valve of claim 1 - 5 wherein said cartridge consists of two synchronized and matching parts made out of different materials; which can be, for example, brass and plastic material. .

Fig.1

## Fig. 2

Schnitt A-B

11

18

8

1

## Fig. 3

11

8

20

3

1

19

15

## Fig. 4

1

9/19

21

22